(19) Europäisches Patentamt
European Patent Office
Office européen des brevets

(11) **EP 4 546 037 A1**

(12) **EUROPEAN PATENT APPLICATION**
published in accordance with Art. 153(4) EPC

(43) Date of publication:
**30.04.2025  Bulletin 2025/18**

(21) Application number: **23893965.6**

(22) Date of filing: **23.11.2023**

(51) International Patent Classification (IPC):
*G02F 1/1333* (2006.01)

(52) Cooperative Patent Classification (CPC):
**G02F 1/1333**

(86) International application number:
**PCT/CN2023/133618**

(87) International publication number:
**WO 2024/109876 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022  CN 202211491298**

(71) Applicants:
• **Boe Technology Group Co., Ltd.**
**Beijing 100015 (CN)**
• **Beijing BOE Display Technology Co., Ltd.**
**Beijing 100176 (CN)**

(72) Inventors:
• **CHEN, Dongchuan**
**Beijing 100176 (CN)**
• **LIAO, Yanping**
**Beijing 100176 (CN)**
• **BO, Lingdan**
**Beijing 100176 (CN)**
• **HUANG, Jianhua**
**Beijing 100176 (CN)**
• **QU, Yingying**
**Beijing 100176 (CN)**
• **ZHENG, Xue**
**Beijing 100176 (CN)**
• **TIAN, Xiaohan**
**Beijing 100176 (CN)**
• **XIAO, Junying**
**Beijing 100176 (CN)**
• **NIE, Lujie**
**Beijing 100176 (CN)**
• **LI, Hui**
**Beijing 100176 (CN)**

(74) Representative: **Klunker IP**
**Patentanwälte PartG mbB**
**Destouchesstraße 68**
**80796 München (DE)**

(54) **LIQUID CRYSTAL DISPLAY PANEL AND DISPLAY APPARATUS**

(57)    A liquid crystal display panel (100) and a display apparatus (300). The liquid crystal display panel (100) comprises an array substrate (110), an opposed substrate (120), and a liquid crystal layer (130). The array substrate (110) comprises a first base substrate (111) and a plurality of pixel units (200) located on the first base substrate (111); the opposed substrate (120) is arranged opposite to the array substrate (110) at an interval and comprises a second base substrate (121); the liquid crystal layer (130) is located between the array substrate (110) and the opposed substrate (120); each pixel unit (200) comprises a first electrode (210) and a second electrode (220); the first electrode (210) is located on the side of the second electrode (220) distant from the first base substrate (111); the first electrode (210) comprises first slits (215); the liquid crystal layer (130) comprises negative liquid crystals, which satisfy the following formula: formula (I), wherein $\Delta n$ is the birefringence of the negative liquid crystals, no is the refractive index of an ordinary ray of the negative liquid crystals, ne is the refractive index of an extraordinary ray of the negative liquid crystals, and Kave is the average elastic constant of the negative liquid crystals. Therefore, the liquid crystal display panel (100) has a high contrast ratio.

EP 4 546 037 A1

150 121 122 142 123 162

120

130

110

111 220 210 215 191 192 162 141

Fig. 2

**Description**

The application claims priority to the Chinese patent application No. 202211491298.1, filed on November 25, 2022, the entire disclosure of which is incorporated herein by reference as part of the present application.

TECHNICAL FIELD

Embodiments of the present disclosure relate to a liquid crystal display panel and a display device.

BACKGROUND

As display technology continues to advance, the application of display panels in a wide range of electronic products is becoming increasingly extensive. On the other hand, consumers' demands for the contrast, image quality, resolution, transmittance, and color gamut of display panels are also growing higher.

At present, display panels mainly include liquid crystal display panels and organic light-emitting diode display panels. A liquid crystal display panel usually includes an array substrate, an opposite substrate arranged opposite to the array substrate, and a liquid crystal layer located between the array substrate and the opposite substrate. The liquid crystal display panel can change the rotation direction of liquid crystal molecules in the liquid crystal layer through the electric field generated by the pixel electrodes in the array substrate, and cooperate with the polarizer to realize display. The organic light-emitting diode display panel comprises an anode, a cathode and an organic light-emitting layer arranged between the anode and the cathode; the organic light-emitting diode can drive the organic light-emitting layer to emit light through the electric current generated by the anode and the cathode.

SUMMARY

The embodiment of the disclosure provides a liquid crystal display panel and a display device. In the liquid crystal display panel, the liquid crystal layer adopts the negative liquid crystal and satisfies the above formula; due to the higher transmittance and lower dark-state scattering factor of the negative liquid crystal, the liquid crystal display panel can reduce the scattering in the dark state of the liquid crystal, thereby lowering the dark-state brightness and consequently enhancing the contrast. On the other hand, by controlling the birefringence of the negative liquid crystal, the refractive index of ordinary light, the refractive index of extraordinary light and the average elastic constant, the liquid crystal display panel can make the scattering coefficient of the negative liquid crystal satisfy the above formula, further reduce the scattering of liquid crystal in the dark state and thereby reduce the brightness in the dark state without losing the transmittance, thus improving the contrast.

At least one embodiment of the present disclosure provides a liquid crystal display panel, which includes: an array substrate, including a first substrate and a plurality of pixel units located on the first substrate; an opposite substrate, opposite to and spaced apart from the array substrate, and including a second substrate; and a liquid crystal layer, located between the array substrate and the opposite substrate, each of the plurality of pixel units includes a first electrode and a second electrode, the first electrode is on a side of the second electrode away from the first substrate, and the first electrode includes a first slit, the liquid crystal layer includes negative liquid crystal and satisfies a following formula:

$$0.001 < \frac{[\Delta n(n_e + n_o)]^2}{K_{ave}} < 0.006,$$

where $\Delta n$ is a birefringence of the negative liquid crystal, $n_o$ is a refractive index of the negative liquid crystal for ordinary light, $n_e$ is a refractive index of the negative liquid crystal for extraordinary light, and $K_{ave}$ is an average elastic constant of the negative liquid crystal.

For example, in the liquid crystal display panel provided by an embodiment of the present disclosure, the birefringence $\Delta n$ of the negative liquid crystal ranges from 0.07 to 0.12, and the average elastic constant $K_{ave}$ of the negative liquid crystal ranges from 12 to 30.

For example, in the liquid crystal display panel provided by an embodiment of the present disclosure, the negative liquid crystal satisfies a following formula:

$$0.001 < \frac{[\Delta n(n_e + n_o)]^2}{K_{ave}} < 0.004.$$

For example, in the liquid crystal display panel provided by an embodiment of the present disclosure, a phase difference $\Delta nd$ of the negative liquid crystal ranges from 250 nm to 360 nm.

For example, in the liquid crystal display panel provided by an embodiment of the present disclosure, each of the plurality of pixel units further includes a signal line extending along a first direction, and an included angle $\alpha$ between an extension direction of the first slit and the first direction ranges from 5 degrees to 15 degrees.

For example, in the liquid crystal display panel provided by an embodiment of the present disclosure, a contrast of the liquid crystal display panel is greater than or equal to 1800.

For example, in the liquid crystal display panel provided by an embodiment of the present disclosure, the contrast of the liquid crystal display panel is greater than or equal to 2500.

For example, in the liquid crystal display panel provided by an embodiment of the present disclosure, a phase difference $\Delta nd$ of the negative liquid crystal ranges from 320 nm to 360 nm.

For example, in the liquid crystal display panel provided by an embodiment of the present disclosure, the birefringence $\Delta n$ of the negative liquid crystal ranges from 0.09 to 0.12, and a thickness d of the liquid crystal layer in a second direction perpendicular to the first substrate ranges from 3.3 microns to 3.8 microns.

For example, in the liquid crystal display panel provided by an embodiment of the present disclosure, each of the plurality of pixel units further includes a signal line extending along a first direction, and an included angle $\alpha$ between an extension direction of the first slit and the first direction ranges from 7 degrees to 15 degrees.

For example, in the liquid crystal display panel provided by an embodiment of the present disclosure, the negative liquid crystal further satisfies a following formula:

$$\gamma 1/k22 \leqslant 10,$$

where $\gamma 1$ is a rotational viscosity of the negative liquid crystal, and $k22$ is a torsional elastic constant of the negative liquid crystal.

For example, in the liquid crystal display panel provided by an embodiment of the present disclosure, the negative liquid crystal further satisfies a following formula:

$$\gamma 1/k22 \leqslant 9,$$

where $\gamma 1$ is the rotational viscosity of the negative liquid crystal, and $k22$ is the torsional elastic constant of the negative liquid crystal.

For example, in the liquid crystal display panel provided by an embodiment of the present disclosure, a thickness d of the liquid crystal layer in a second direction perpendicular to the first substrate ranges from 2.5 microns to 3.3 microns.

For example, in the liquid crystal display panel provided by an embodiment of the present disclosure, the thickness d of the liquid crystal layer in the second direction perpendicular to the first substrate is ranges from 2.5 microns to 3.0 microns.

For example, in the liquid crystal display panel provided by an embodiment of the present disclosure, each of the plurality of pixel units further includes a signal line extending along a first direction, and an included angle $\alpha$ between an extension direction of the first slit and the first direction ranges from 11 degrees to 15 degrees.

For example, in the liquid crystal display panel provided by an embodiment of the present disclosure, the negative liquid crystal further satisfies the following formula:

$$K_{ave}/\Delta\varepsilon < 5.5,$$

where $\Delta\varepsilon$ is a dielectric constant of the negative liquid crystal.

For example, in the liquid crystal display panel provided by an embodiment of the present disclosure, the negative liquid crystal further satisfies a following formula:

$$Kave/\Delta\varepsilon < 2.7,$$

where $\Delta\varepsilon$ is the dielectric constant of the negative liquid crystal.

For example, in the liquid crystal display panel provided by an embodiment of the present disclosure, a thickness d of the liquid crystal layer in a second direction perpendicular to the first substrate is greater than or equal to 2.8 microns.

For example, in the liquid crystal display panel provided by an embodiment of the present disclosure, each of the plurality of pixel units further includes a signal line extending along a first direction, and an included angle $\alpha$ between an extension direction of the first slit and the first direction is less than or equal to 11 degrees.

For example, in the liquid crystal display panel provided by an embodiment of the present disclosure, a thickness d of the liquid crystal layer in a second direction perpendicular to the first substrate ranges from 2.8 microns to 3.3 microns; each of the plurality of pixel units further includes a signal line extending along a first direction, and an included angle $\alpha$ between an extension direction of the first slit and the first direction greater than or equal to 7 degrees.

For example, in the liquid crystal display panel provided by an embodiment of the present disclosure, a gray-scale response time of the liquid crystal display panel is less than or equal to 8ms.

For example, in the liquid crystal display panel provided by an embodiment of the present disclosure, the thickness d of the liquid crystal layer in the second direction perpendicular to the first substrate ranges from 2.5 microns to 3.0 microns, and the included angle $\alpha$ between the extension direction of the first slit and the first direction ranges from 11 degrees to 15 degrees.

For example, the liquid crystal display panel provided by an embodiment of the present disclosure further includes: a first polarizer, located on a side of the first substrate away from the liquid crystal layer; and a second polarizer, located on a side of the second substrate away from the liquid crystal layer, both a polarization degree of the first polarizer and a polarization degree of the second polarizer are greater than 99.998%.

For example, the liquid crystal display panel provided by an embodiment of the present disclosure further includes: a transparent conductive oxide layer, located on a side of the second substrate away from the liquid crystal layer, a thickness of the transparent conductive oxide layer is less than or equal to 120 angstroms.

For example, in the liquid crystal display panel provided by an embodiment of the present disclosure, the opposite substrate further includes: a plurality of color filters; and a black matrix, located between two adjacent color filters among the plurality of color filters, a width of the black matrix is greater than or equal to 14 microns.

For example, in the liquid crystal display panel provided by an embodiment of the present disclosure, a thickness of the black matrix is greater than or equal to 1.3 microns.

For example, the liquid crystal display panel provided by an embodiment of the present disclosure further includes: a gate line, extending in a first direction; a first orientation layer, located on a surface of the array substrate close to the liquid crystal layer; and a second orientation layer, located on a surface of the opposite substrate close to the liquid crystal layer, a rubbing orientation direction of the first orientation layer is perpendicular to an extension direction of the gate line, and a rubbing orientation direction of the second orientation layer is perpendicular to an extension direction of the first slit.

At least one embodiment of the present further discloses a liquid crystal display panel, which includes: an array substrate, including a first substrate and a plurality of pixel units located on the first substrate; an opposite substrate, opposite to and spaced apart from the array substrate, and including a second substrate; and a liquid crystal layer, located between the array substrate and the opposite substrate, each of the plurality of pixel units includes a first electrode and a second electrode, where the first electrode is on a side of the second electrode away from the first substrate, the first electrode includes a first slit, and a contrast of the liquid crystal display panel is greater than or equal to 1800.

For example, in the liquid crystal display panel provided by an embodiment of the present disclosure, the liquid crystal layer includes negative liquid crystal and satisfies a following formula:

$$0.001 < \frac{[\Delta n (n_e + n_o)]^2}{K_{ave}} < 0.006,$$

where $\Delta n$ is a birefringence of the negative liquid crystal, $n_o$ is a refractive index of the negative liquid crystal for ordinary light, $n_e$ is a refractive index of the negative liquid crystal for extraordinary light, and $K_{ave}$ is an average elastic constant of the negative liquid crystal.

For example, in the liquid crystal display panel provided by an embodiment of the present disclosure, the negative liquid crystal satisfies a following formula:

$$0.001 < \frac{[\Delta n (n_e + n_o)]^2}{K_{ave}} < 0.004,$$

where $\Delta n$ is the birefringence of the negative liquid crystal, $n_o$ is the refractive index of the negative liquid crystal for ordinary light, $n_e$ is the refractive index of the negative liquid crystal for extraordinary light, and $K_{ave}$ is the average elastic constant of the negative liquid crystal.

For example, in the liquid crystal display panel provided by an embodiment of the present disclosure, a thickness d of the liquid crystal layer in a second direction perpendicular to the first substrate ranges from 2.5 microns to 3.6 microns.

For example, in the liquid crystal display panel provided by an embodiment of the present disclosure, a phase difference $\Delta nd$ of the negative liquid crystal ranges from 210 nm to 310 nm.

For example, in the liquid crystal display panel provided by an embodiment of the present disclosure, each of the plurality of pixel units further includes a signal line extending along a first direction, and an included angle $\alpha$ between an extension direction of the first slit and the first direction ranges from 5 degrees to 15 degrees.

For example, in the liquid crystal display panel provided by an embodiment of the present disclosure, the contrast of the liquid crystal display panel is greater than or equal to 2500.

For example, in the liquid crystal display panel provided by an embodiment of the present disclosure, a transmittance ratio of the liquid crystal display panel is greater than or equal to 5.2%.

For example, in the liquid crystal display panel provided by an embodiment of the present disclosure, a thickness d of the liquid crystal layer in a second direction perpendicular to the first substrate ranges from 3.3 microns to 3.7 microns, and an included angle $\alpha$ between an extension direction of the first slit and a first direction ranges from 11 degrees to 15 degrees.

For example, the liquid crystal display panel provided by an embodiment of the present disclosure further includes: a first polarizer, located on a side of the first substrate away from the liquid crystal layer; and a second polarizer, located on a side of the second substrate away from the liquid crystal layer, both a polarization degree of the first polarizer and a polarization degree of the second polarizer are greater than 99.998%.

For example, the liquid crystal display panel provided by an embodiment of the present disclosure further includes: a transparent conductive oxide layer, located on a side of the second substrate away from the liquid crystal layer, a thickness of the transparent conductive oxide layer is less than 120 angstroms.

For example, in the liquid crystal display panel provided by an embodiment of the present disclosure, the opposite substrate further includes: a plurality of color filters; and a black matrix, located between two adjacent color filters among the plurality of color filters, a width of the black matrix is greater than or equal to 14 microns.

For example, in the liquid crystal display panel provided by an embodiment of the present disclosure, a thickness of the black matrix is greater than or equal to 1.3 microns.

For example, the liquid crystal display panel provided by an embodiment of the present disclosure further includes: a gate line, extending in a first direction; a first orientation layer, located on a surface of the array substrate close to the liquid crystal layer; and a second orientation layer, located on a surface of the opposite substrate close to the liquid crystal layer, a rubbing orientation direction of the first orientation layer is perpendicular to an extension direction of the gate line, and a rubbing orientation direction of the second orientation layer is perpendicular to the extension direction of the gate line.

At least one embodiment of the present disclosure further provides a display device, which includes any one of the abovementioned liquid crystal display panel.

BRIEF DESCRIPTION OF DRAWINGS

In order to more clearly explain the technical solution of the embodiments of the present disclosure, the attached drawings of the embodiments will be briefly introduced below. Obviously, the attached drawings in the following description only relate to some embodiments of the present disclosure, and are not limited to the present disclosure.

Fig. 1 is a schematic plan view of a liquid crystal display panel provided by an embodiment of the present disclosure.
Fig. 2 is a schematic sectional view of a liquid crystal display panel provided by an embodiment of the present disclosure.
Fig. 3 is a diagram showing the relationship among the thickness of the liquid crystal layer, the slit angle and the contrast in a liquid crystal display panel provided by an embodiment of the present disclosure.
Fig. 4 is a diagram showing the relationship between the thickness and contrast of a liquid crystal layer in a liquid crystal display panel provided by an embodiment of the present disclosure.
Fig. 5 is a schematic plan view of another liquid crystal display panel provided by an embodiment of the present disclosure.
Fig. 6 is a diagram showing the relationship among the thickness of the liquid crystal layer, the slit angle and the transmittance in a liquid crystal display panel provided by an embodiment of the present disclosure.
Fig. 7 is a diagram showing the relationship among the thickness of the liquid crystal layer, the slit angle and the response speed in a liquid crystal display panel provided by an embodiment of the present disclosure.
Fig. 8 is a diagram showing the relationship among the thickness of the liquid crystal layer, the slit angle and the liquid crystal driving voltage Vop in a liquid crystal display panel provided by an embodiment of the present disclosure.
Fig. 9 is a diagram showing the relationship between the rubbing orientation direction of the orientation layer and the first slit in a liquid crystal display panel provided by an embodiment of the present disclosure.
Fig. 10 is a diagram showing the relationship between the rubbing orientation direction of the orientation layer and the first slit in another liquid crystal display panel provided by an embodiment of the present disclosure.
Fig. 11 is a diagram showing the relationship among the thickness of a liquid crystal layer, the slit angle in the liquid crystal display panel and various parameters provided by an embodiment of the present disclosure.
Fig. 12 is a schematic diagram of a display device provided by an embodiment of the present disclosure.

DETAILED DESCRIPTION

In order to make the purpose, technical scheme and advantages of the embodiment of the disclosure more clear, the technical scheme of the embodiment of the disclosure will be described clearly and completely with the attached drawings. Obviously, the described embodiment is a part of the embodiment of the present disclosure, not the whole embodiment. Based on the described embodiments of the present disclosure, all other embodiments obtained by ordinary people in the field without creative labor belong to the scope of protection of the present disclosure.

Unless otherwise defined, technical terms or scientific terms used in this disclosure shall have their ordinary meanings as understood by people with ordinary skills in the field to which this disclosure belongs. The terms "first", "second" and the like used in this disclosure do not indicate any order, quantity or importance, but are only used to distinguish different components. Similar words such as "including" or "containing" mean that the elements or objects appearing before the word cover the elements or objects listed after the word and their equivalents, without excluding other elements or objects. Similar words such as "connected" or "connected" are not limited to physical or mechanical connection, but can include electrical connection, whether direct or indirect.

Unless otherwise defined, the features such as "parallel", "vertical" and "identical" used in the embodiments of this disclosure all include cases such as "parallel", "vertical" and "identical" in a strict sense, and cases such as "approximately parallel", "approximately vertical" and "approximately identical" contain certain errors. For example, the above-mentioned "roughly" can mean that the difference of the compared objects is within 10% or 5% of the average value of the compared objects. When the number of one component or element is not specified in the following of the disclosed embodiment, it means that the component or element can be one or more, or can be understood as at least one. "at least one" means one or more, and "multiple" means at least two.

Generally, liquid crystal display technology can be divided into vertical liquid crystal display technology driven by vertical electric field (VA mode) and horizontal liquid crystal display technology driven by horizontal electric field (IPS or ADS mode). Horizontal liquid crystal display technology has become a research hotspot because of its advantages such as wide viewing angle, wide color gamut and true color. However, the contrast of horizontal liquid crystal display technology is relatively low, which has become one of the main problems limiting the development of horizontal liquid crystal display technology. Moreover, how to improve the contrast of horizontal liquid crystal display technology is also a technical problem that has been difficult to solve for a long time. In this regard, the inventor of the present application proposed a scheme of horizontal liquid crystal display technology which can realize high contrast by introducing the negative liquid crystal and modulating various optical parameters.

The embodiment of the disclosure provides a liquid crystal display panel and a display device. The liquid crystal display panel comprises an array substrate, an opposite substrate and a liquid crystal layer; the array substrate includes a first substrate and a plurality of pixel units located on the first substrate; the opposite substrate is opposite to and spaced apart from the array substrate, and including a second substrate; and the liquid crystal layer is located between the array substrate and the opposite substrate; each of the plurality of pixel units comprises a first electrode and a second electrode, the first electrode is on a side of the second electrode away from the first substrate, and the first electrode comprises a first slit, the liquid crystal layer includes negative liquid crystal and satisfies a following formula:

$$0.001 < \frac{[\Delta n(n_e + n_o)]^2}{K_{ave}} < 0.006,$$

where $\Delta n$ is a birefringence of the negative liquid crystal, $n_o$ is a refractive index of the negative liquid crystal for ordinary light, $n_e$ is a refractive index of the negative liquid crystal for extraordinary light, and $K_{ave}$ is an average elastic constant of the negative liquid crystal.

In the liquid crystal display panel according to the embodiment of the present disclosure, the liquid crystal layer adopts the negative liquid crystal; because the transmittance of the negative liquid crystal is higher and the dark-state scattering factor of the negative liquid crystal is lower, the liquid crystal display panel makes use of these characteristics, and makes a series of explorations on the birefringence, the refractive index for ordinary light, the refractive index for extraordinary light, and the average elastic constant of the negative liquid crystal, so as to reduce the dark-state scattering of the liquid crystal and reduce the dark-state brightness of the liquid crystal display panel, and further improve the contrast. On the other hand, by controlling the birefringence of the negative liquid crystal, the refractive index for ordinary light, the refractive index for extraordinary light and the average elastic constant to satisfy the above formula, the liquid crystal display panel can make the scattering coefficient of the negative liquid crystal less than 0.006, thereby further reducing the scattering of liquid crystal in the dark state and reducing the brightness in the dark state without losing the transmittance, and further improving the contrast.

Next, the liquid crystal display panel and the display device provided by the embodiment of the present disclosure is described in detail with reference to the drawings.

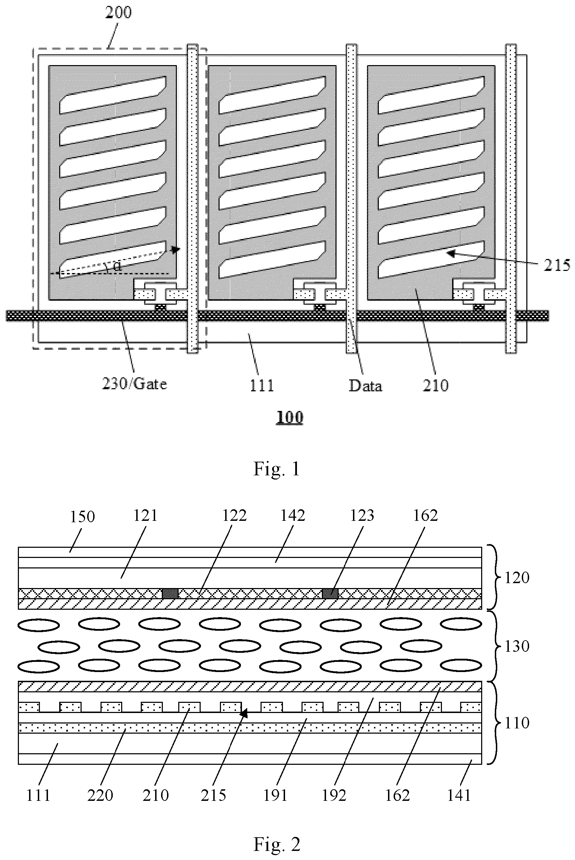

An embodiment of the present disclosure provides a liquid crystal display panel. Fig. 1 is a schematic plan view of a liquid crystal display panel provided by an embodiment of the present disclosure. Fig. 2 is a schematic sectional view of a liquid crystal display panel provided by an embodiment of the present disclosure. As shown in Fig. 1 and Fig. 2, the liquid crystal display panel 100 includes an array substrate 110, an opposite substrate 120 and a liquid crystal layer 130. The array substrate 110 includes a first substrate 111 and a plurality of pixel units 200 located on the first substrate 111; the opposite substrate 120 is opposite to and spaced apart from the array substrate 110 and includes a second substrate 121. The liquid crystal layer 130 is located between the array substrate 110 and the opposite substrate 120; each pixel unit 200 includes a first electrode 210 and a second electrode 220, the first electrode 210 is on the side of the second electrode 220 away from the first substrate 111. The first electrode 210 includes a first slit 215, and the liquid crystal layer 130 includes negative liquid crystal, and the following formula is satisfied:

$$0.001 < \frac{[\Delta n(n_e + n_o)]^2}{K_{ave}} < 0.006,$$

where $\Delta n$ is the birefringence of the negative liquid crystal, $n_o$ is the refractive index of the negative liquid crystal for ordinary light, $n_e$ is the refractive index of the negative liquid crystal for extraordinary light, and $K_{ave}$ is the average elastic constant of the negative liquid crystal. It should be noted that $K_{ave}$ may be the average of the unfolding elastic constant K11, the twisting elastic constant K22 and the bending elastic constant K33 of the liquid crystal. In addition, the above formula may also be regarded as the range formula of the scattering coefficient of the negative liquid crystal.

In the liquid crystal display panel, the contrast is the ratio of the brightness of the bright state L255 to the brightness of the dark state L0, that is, CR = L255/L0. Therefore, the contrast can be improved by increasing the brightness of the bright state or decreasing the brightness of the dark state. Because of the limited enhancement range of the bright state, the enhancement of contrast mainly depends on the reduction of the L0 brightness.

In the liquid crystal display panel according to the embodiment of the present disclosure, the liquid crystal layer adopts the negative liquid crystal and satisfies the above formula; because the transmittance of the negative liquid crystal is higher and the dark-state scattering factor is lower, the liquid crystal display panel can reduce the dark-state scattering of the liquid crystal to reduce the dark-state brightness, thus improving the contrast. On the other hand, by controlling the birefringence of the negative liquid crystal, the refractive index for ordinary light, the refractive index for extraordinary light and the average elastic constant, the liquid crystal display panel can make the scattering coefficient of the negative liquid crystal satisfy the above formula, further reduce the scattering of the liquid crystal in the dark state and reduce the brightness in the dark state without losing the transmittance, thus improving the contrast. In addition, because the first electrode of the liquid crystal display panel has the first slit, the first electrode and the second electrode can form a horizontal electric field, that is, the liquid crystal display panel adopts the ADS (Advanced Super Dimension Switching) mode, which also has the advantages of high transmittance and fast response speed. In summary, this liquid crystal display panel has excellent overall performance because it realizes high contrast in addition to the advantages of conventional ADS mode liquid crystal display panels such as high transmittance and fast response speed.

For example, in the case where the negative liquid crystal of the liquid crystal layer satisfies the above formula, the contrast of the liquid crystal display panel can reach above 1800.

In some examples, the birefringence $\Delta n$ of the negative liquid crystal ranges from 0.07 to 0.12, and the average elastic constant $K_{ave}$ of the negative liquid crystal ranges from 12 to 30. Therefore, the liquid crystal display panel can make the scattering coefficient of the negative liquid crystal satisfy the above formula, and improve the contrast without losing the transmittance.

In some examples, the negative liquid crystal satisfies the following formula:

$$0.001 < \frac{[\Delta n(n_e + n_o)]^2}{K_{ave}} < 0.004.$$

Therefore, by controlling the birefringence of the negative liquid crystal, the refractive index for ordinary light, the refractive index for extraordinary light, and the average elastic constant to satisfy the above formula, the liquid crystal display panel can further reduce the scattering of the liquid crystal in the dark state and reduce the brightness in the dark state, thereby improving the contrast.

For example, in the case where the negative liquid crystal of the liquid crystal layer satisfies the above formula, the contrast of the liquid crystal display panel can reach above 2500.

In some examples, the negative liquid crystal satisfies the following formula:

$$0.001 < \frac{[\Delta n(n_e + n_o)]^2}{K_{ave}} < 0.0035.$$

Therefore, by controlling the birefringence of the negative liquid crystal, the refractive index for ordinary light, the refractive index for extraordinary light, and the average elastic constant to satisfy the above formula, the liquid crystal display panel can further reduce the scattering of the liquid crystal in the dark state and reduce the brightness in the dark state, thereby improving the contrast.

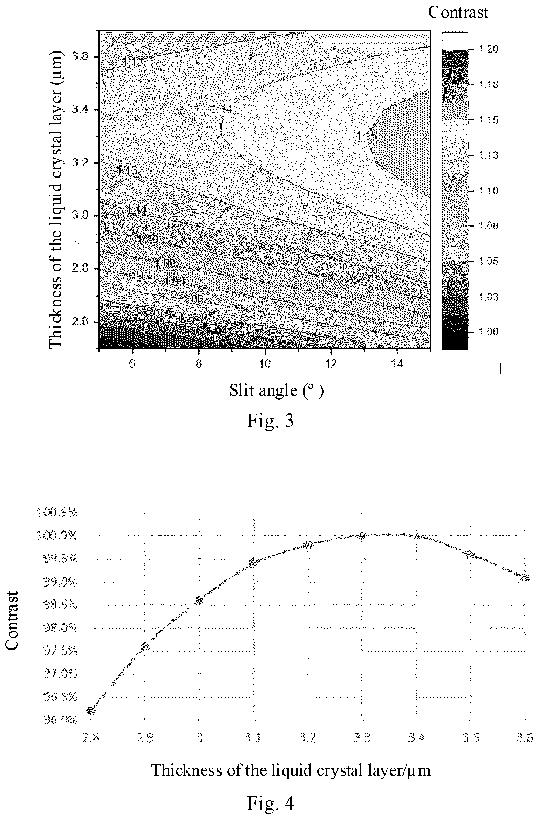

Fig. 3 is a diagram showing the relationship among the thickness of the liquid crystal layer, the slit angle and the contrast in a liquid crystal display panel provided by an embodiment of the present disclosure. Fig. 4 is a diagram showing the relationship between the thickness of the liquid crystal layer and contrast in a liquid crystal display panel provided by an embodiment of the present disclosure. In a liquid crystal display panel, the thickness of the liquid crystal layer not only affects the scattering brightness in the dark state, but also affects the brightness in the bright state L255. Therefore, for a specific liquid crystal, there is an optimal cell thickness value. Above or below this value, the contrast will decrease. As shown in Fig. 4, the optimal thickness of the liquid crystal layer of the liquid crystal display panel is about 3.35 microns. Of course, the optimal cell thickness of each liquid crystal may be different, which is related to the phase difference $\Delta n$d of the liquid crystal layer. It should be noted that the contrast value shown in Fig. 4 is not an actual value, but a value processed for comparison.

In some examples, the negative liquid crystal phase difference in the liquid crystal layer 130 ranges from 250 to 360 nanometers. It should be noted that the above phase difference can be expressed by $\Delta n$d, where $\Delta n$ is the birefringence of the negative liquid crystal and d is the thickness of the liquid crystal layer.

In some examples, as shown in Fig. 1, each pixel unit 200 further includes a signal line 230 extending along the first direction, and the included angle $\alpha$ between the extending direction of the first slit 215 and the first direction ranges from 5 degrees to 15 degrees.

It should be noted that the range of the included angle between the extension direction of the first slit and the first direction mentioned above refers to the absolute value of the included angle. In the case where each pixel unit includes a plurality of domains, the absolute value of the included angle between the first slits of different domains and the first direction ranges from 5 to 15 degrees.

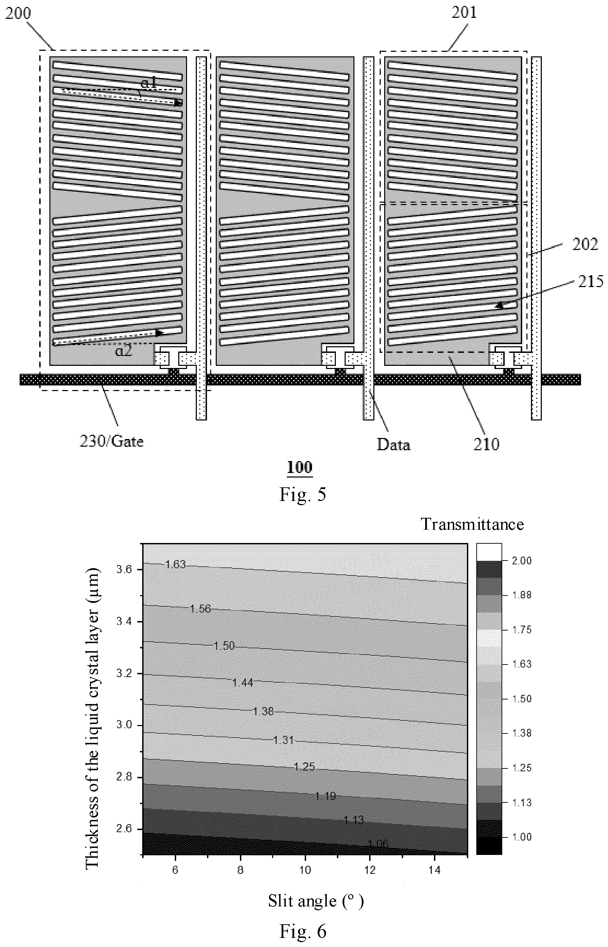

For example, Fig. 5 is a schematic plan view of another liquid crystal display panel provided by an embodiment of the present disclosure. As shown in Fig. 5, each pixel unit 200 includes a first domain 201 and a second domain 202; the included angle α1 between the extending direction of the first slit 215 in the first domain 201 and the first direction ranges from 5 to 15 degrees, and the included angle α2 between the extending direction of the first slit 215 and the first direction in the second domain 201 also ranges from 5 to 15 degrees.

For example, the signal line 230 may be a gate line. Of course, the embodiment of the present disclosure includes but is not limited to this, and the above signal line 230 may also be a data line.

In the liquid crystal display panel according to the embodiment of the present disclosure, as shown in Fig. 3, the included angle between the first slit and the first direction (slit angle for short) also has a certain influence on the contrast, and the larger the slit angle, the higher the contrast, because the transmittance increases with the increase of the slit angle. In the liquid crystal display panel, the dark-state brightness is dominated by the scattering factor of the liquid crystal, so the change of the slit angle has nothing to do with the dark-state brightness, so the contrast increases with the increase of the slit angle. However, when designing the slit angle, the slit angle we finally choose will not be too high, and the selection range of the slit angle is 5-15 degrees. This is because if the slit angle is too high, the driving voltage (Vop) of the liquid crystal will also increase, which will lead to the problems of an unsupported driving chip and a high power consumption. Therefore, by setting the slit angle in the range of 5 degrees - 15 degrees, the liquid crystal display panel can further improve the contrast under the premise of avoiding excessively high driving voltage of the liquid crystal.

Fig. 6 is a diagram showing the relationship among the thickness of the liquid crystal layer, slit angle and the transmittance in a liquid crystal display panel provided by an embodiment of the present disclosure.

In some examples, as shown in Fig. 6, on the basis of high contrast, in order to further improve the transmittance of products, the value range of the phase difference of the negative liquid crystal in the liquid crystal layer 130 is from 320 to 360 nanometers. Therefore, by improving the phase difference of the negative liquid crystal, the transmittance of the liquid crystal display panel is improved. It should be noted that the value of transmittance shown in Fig. 6 is not an actual value, but a value processed for convenience of comparison.

In some examples, the birefringence Δn of the negative liquid crystal ranges from 0.09 to 0.12, and the thickness d of the liquid crystal layer in the second direction perpendicular to the first substrate ranges from 3.3 microns to 3.8 microns.

In some examples, the included angle α between the extending direction of the first slit and the first direction ranges from 7 degrees to 15 degrees.

In some examples, while the contrast of the liquid crystal display panel can reach more than 2500, the transmittance of the liquid crystal display panel is greater than or equal to 5.2% by controlling the thickness of the liquid crystal layer to be in the ranges of 3.3 microns - 3.7 microns and the slit angle to be in the range of 7 degrees - 15 degrees.

For example, the above transmittance can be measured in the case of 75-inch, 4K resolution and quantum dot backlight module. That is, the transmittance of the liquid crystal display panel is greater than or equal to 5.2%@75 4K QD BLU.

In some examples, under the premise of high contrast, in order to further improve the response speed, the negative liquid crystal in the liquid crystal layer also satisfies the following formula:

$$\gamma 1/k22 \leqslant 10,$$

where $\gamma 1$ is the rotational viscosity of the negative liquid crystal and $k22$ is the torsional elastic constant of the negative liquid crystal.

Therefore, the liquid crystal display panel can improve the response speed while achieving high contrast. For example, the response speed of the liquid crystal display panel GTG OD OFF is ≤ 20 ms.

In some examples, the negative liquid crystal in the liquid crystal layer also satisfies the following formula:

$$\gamma 1/k22 \leqslant 9,$$

where $\gamma 1$ is the rotational viscosity of the negative liquid crystal, and $k22$ is the torsional elastic constant of the negative liquid crystal.

Therefore, the liquid crystal display panel can improve the response speed while achieving high contrast. For example, the response speed of the liquid crystal display panel GTG OD OFF is ≤ 15 ms.

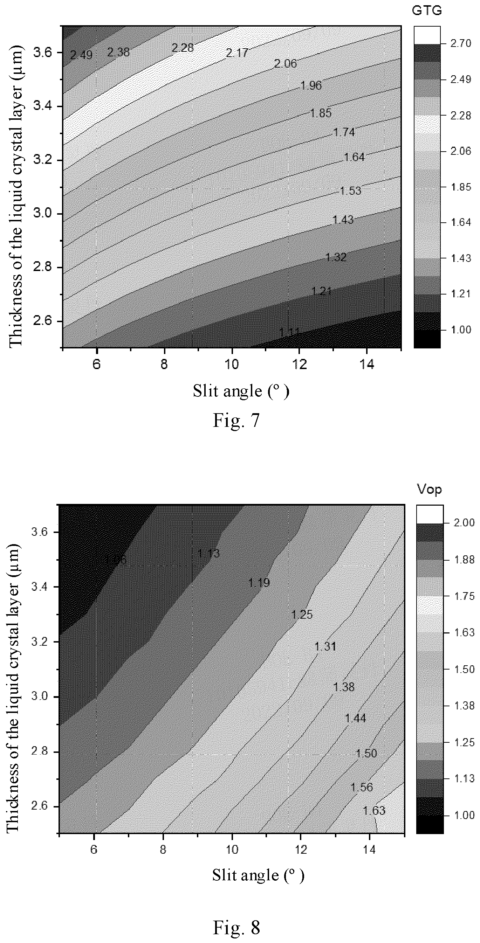

Fig. 7 is a diagram showing the relationship among the thickness of the liquid crystal layer, slit angle and the response speed in a liquid crystal display panel provided by an embodiment of the present disclosure. As shown in Fig. 7, in the above-mentioned liquid crystal display panel with high contrast and high response speed, the thickness d of the liquid crystal layer 130 in the second direction perpendicular to the first substrate 111 ranges from 2.5 microns to 3.3 microns. Because the thickness of the liquid crystal layer also affects the response speed, the liquid crystal display panel can have high contrast and high response speed at the same time by making the thickness of the liquid crystal layer range from 2.5 microns to 3.3 microns. It should be noted that the value of the response speed shown in Fig. 7 is not an actual value, but a value processed for convenience of comparison.

In some examples, in the above-mentioned liquid crystal display panel with high contrast and high response speed, in order to further improve the response speed, for example, the gray-scale response time is less than or equal to 8ms (for example, GTG OD OFF ≤ 8ms), the thickness d of the liquid crystal layer 130 in the second direction perpendicular to the first substrate 111 ranges from 2.5 microns to 3.0 microns, and the included angle α between the extension direction of the first slit 215 and the first direction ranges from 11 degrees to 15 degrees.

In some examples, under the premise of high contrast, in order to reduce power consumption, the negative liquid crystal in the liquid crystal layer also satisfies the following formula:

$$K_{ave}/\Delta\varepsilon < 5.5,$$

where $\Delta\varepsilon$ is the dielectric constant of the negative liquid crystal.

Therefore, the liquid crystal display panel can reduce product power consumption on the premise of achieving high contrast.

In some examples, under the premise of high contrast, in order to reduce power consumption, the negative liquid crystal in the liquid crystal layer also satisfies the following formula:

$$K_{ave}/\Delta\varepsilon < 2.7,$$

where $\Delta\varepsilon$ is the dielectric constant of the negative liquid crystal.

Therefore, the liquid crystal display panel can further reduce product power consumption on the premise of achieving high contrast.

In the liquid crystal display panel, the lower the driving voltage (Vop) of the liquid crystal, the lower the power consumption, and the driving voltage (Vop) of the liquid crystal is also affected by the liquid crystal parameters, the thickness of the liquid crystal layer, the slit angle and other factors.

Fig. 8 is a diagram showing the relationship among the thickness of the liquid crystal layer, slit angle and the liquid crystal driving voltage (Vop) in a liquid crystal display panel provided by an embodiment of the present disclosure. As shown in Fig. 8, the lower the thickness of the liquid crystal layer, the greater the driving voltage (Vop) of the liquid crystal, and the greater the slit angle, the greater the power consumption. Therefore, on the premise of satisfying the above liquid crystal parameter $K_{ave}/\Delta\varepsilon$ <2.7, the liquid crystal display panel can further reduce power consumption by controlling the slit angle to be less than 11 degrees and the thickness of the liquid crystal layer to be greater than 2.8 microns. It should be noted that the value of the driving voltage (Vop) of the liquid crystal shown in Fig. 8 is not an actual value, but a value processed for convenience of comparison.

In some examples, the thickness d of the liquid crystal layer in the second direction perpendicular to the first substrate is greater than or equal to 2.8 microns.

In some examples, each pixel unit further includes a signal line extending along the first direction, and the included angle α between the extending direction of the first slit and the first direction is less than or equal to 11 degrees.

In some examples, on the premise of high contrast, in order to improve the image quality of products, the thickness d of the liquid crystal layer 130 in the second direction perpendicular to the first substrate 111 ranges from 2.8 microns to 3.3 microns; each pixel unit 200 further includes a signal line 230 extending along the first direction, and the included angle α between the extending direction of the first slit 215 and the first direction is 7 degrees or more.

In some examples, as shown in Fig. 2, the liquid crystal display panel 100 further includes a first polarizer 141 and a second polarizer 142; the first polarizer 141 is located on the side of the first substrate 111 away from the liquid crystal layer 130, and the second polarizer 142 is located on the side of the second substrate 121 away from the liquid crystal layer 130. The degree of polarization of the first polarizer 141 and the degree of polarization of the second polarizer 142 are both greater than 99.998%.

In the liquid crystal display panel according to the embodiment of the present disclosure, the polarization degrees (PE) of the first polarizer and the second polarizer also have great influence on the contrast, and the higher the polarization degrees of the polarizers, the higher the contrast of the liquid crystal display panel. It is verified by univariate method that the contrast of the liquid crystal display panel can be improved by more than 200 when the polarization degree of polarizer is increased from 99.99555% to 99.998%. It should be noted that the polarization degree formula of the polarizer can be calculated by the formula $PE = \sqrt{(T_P - T_C)/(T_P + T_C)} \times 100$, where PE is the polarization degree of the polarizer, $T_P$ is the parallel transmittance of the polarizer, and $T_C$ is the vertical transmittance of the polarizer.

In some examples, as shown in Fig. 2, the liquid crystal display panel 100 further includes a transparent conductive oxide layer 150 located on the side of the second substrate 121 away from the liquid crystal layer 130, and the thickness of the transparent conductive oxide layer 150 is less than or equal to 120 angstroms.

Therefore, the liquid crystal display panel can prevent the introduction of static electricity through the transparent conductive oxide layer. Moreover, by controlling the thickness of the transparent conductive oxide layer to be less than or equal to 120 angstroms, the liquid crystal display panel can reduce the non-reflectivity, so that the brightness of the bright state L255 and the brightness of the dark state L0 both decrease, but the degree of the brightness of the dark state L0 decreases more, thereby improving the contrast.

In some examples, as shown in Fig. 2, the opposite substrate 120 further includes a plurality of color filters 122 and a black matrix 123 located between two adjacent color filters 122; the width of the black matrix 123 is 14 microns or more. Therefore, the liquid crystal display panel will reduce the light leakage in the dark state, thereby reducing the brightness in the dark state and further improving the contrast.

In some examples, the thickness of the black matrix 123 is greater than or equal to 1.3 microns. Therefore, the liquid crystal display panel will reduce the light leakage in the dark state, thereby reducing the brightness in the dark state and further improving the contrast.

In some examples, as shown in Fig. 2, the liquid crystal display panel 100 further includes a first alignment layer 161 and a second alignment layer 162; the first alignment layer 161 is located on the surface of the array substrate 110 close to the liquid crystal layer 130. The second alignment layer 162 is located on the surface of the opposite substrate 120 close to the liquid crystal layer 130.

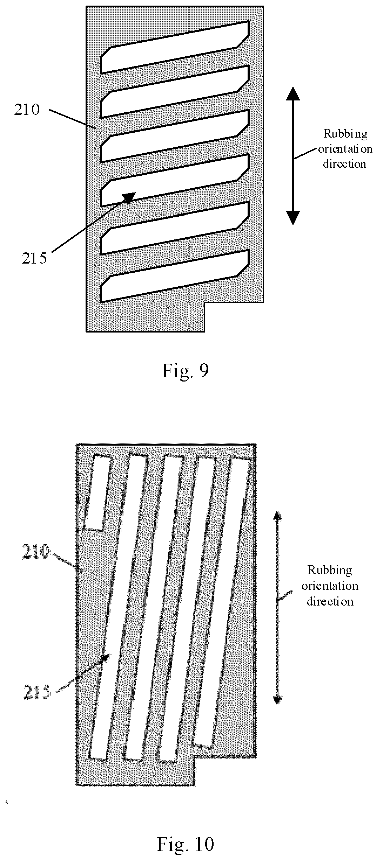

Fig. 9 is a diagram showing the relationship between the rubbing orientation direction of the orientation layer and the first slit in a liquid crystal display panel provided by an embodiment of the present disclosure. As shown in Fig. 9, the rubbing orientation direction of the first orientation layer 161 is perpendicular to the extending direction of the gate line, and the rubbing orientation direction of the second orientation layer 162 is perpendicular to the extending direction of the gate line. Therefore, the liquid crystal display panel can further reduce the light leakage in the dark state, thereby improving the contrast. In this case, the included angle between the extending direction of the first slit and the rubbing orientation direction of the orientation layer ranges from 75 degrees to 85 degrees.

Fig. 10 is a diagram showing the relationship between the rubbing orientation direction of the orientation layer and the first slit in another liquid crystal display panel provided by an embodiment of the present disclosure. As shown in Fig. 10, the rubbing orientation direction of the first orientation layer 161 is perpendicular to the extending direction of the gate line, and the rubbing orientation direction of the second orientation layer 162 is perpendicular to the extending direction of the gate line. Therefore, the liquid crystal display panel can further reduce the light leakage in the dark state, thereby improving the contrast. In this case, the included angle between the extending direction of the first slit and the rubbing orientation direction of the orientation layer ranges from 75 degrees to 85 degrees.

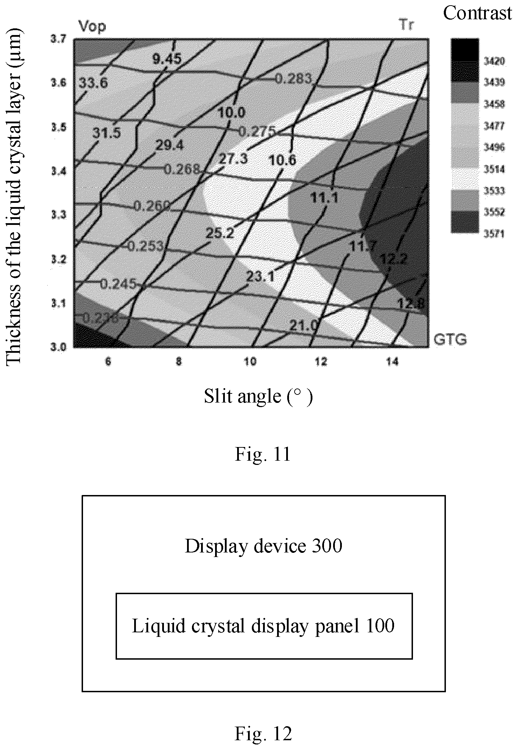

Fig. 11 is a diagram showing the relationship among the thickness of the liquid crystal layer, slit angle and various parameters in a liquid crystal display panel provided by an embodiment of the present disclosure. As shown in Fig. 11, while controlling the birefringence of the negative liquid crystal, the refractive index for ordinary light, the refractive index for extraordinary light, and the average elastic constant to satisfy the following formula:

$$0.001 < \frac{[\Delta n(n_e + n_o)]^2}{K_{ave}} < 0.004.$$

The liquid crystal display panel can further reduce the scattering of the liquid crystal in the dark state by controlling the thickness of the liquid crystal layer to be in the range of 3.0 microns - 3.7 microns and the slit angle to be in the range of 5 degrees - 15 degrees, so as to achieve ultra-high contrast, for example, above 3,400.

In some examples, as shown in Fig. 11, while the liquid crystal display panel has ultra-high contrast, the transmittance of the liquid crystal display panel gradually increases with the increase of the thickness of the liquid crystal layer; with the increase of slit angle, the transmittance of the liquid crystal display panel gradually decreases. In the case where the thickness of the liquid crystal layer is in the range of 3.6 microns - 3.7 microns and the slit angle is in the range of 5 degrees - 10 degrees, the liquid crystal display panel has high transmittance. It should be noted that in actual products, there are many factors that affect the transmittance, so the value of transmittance Tr shown in Figure 11 is not the actual value, but the value processed for the convenience of comparison.

In some examples, as shown in Fig. 11, while the liquid crystal display panel has ultra-high contrast, with the increase of the thickness of the liquid crystal layer, the gray-scale response time of the liquid crystal display panel also gradually increases; with the increase of slit angle, the gray-scale response time of the liquid crystal display panel decreases gradually. By controlling the thickness of the liquid crystal layer to be in the range of 3.0 microns - 3.2 microns and the slit angle to be in the range of 10 degrees - 15 degrees, the liquid crystal display panel has a shorter gray-scale response time. It should be noted that in actual products, there are many factors that affect the gray-scale response time, so the value of the gray-scale response time GTG shown in Fig. 11 is not an actual value, but a processed value for convenience of comparison.

In some examples, as shown in Fig. 11, while the liquid crystal display panel has ultra-high contrast, with the increase of the thickness of the liquid crystal layer, the driving voltage of the liquid crystal in the liquid crystal display panel gradually increases; with the increase of the slit angle, the driving voltage of the liquid crystal in the liquid crystal display panel gradually increases. By controlling the thickness of the liquid crystal layer to be in the range of 3.2 microns - 3.7 microns and the slit angle to be in the range of 5 degrees - 7 degrees, the liquid crystal display panel has a smaller driving voltage of liquid crystal. It should be noted that in actual products, there are many factors that affect the driving voltage of liquid crystal, so the value of the driving voltage Vop of liquid crystal shown in Fig. 11 is not an actual value, but a value processed for convenience of comparison.

An embodiment of the present disclosure also provides another liquid crystal display panel. Fig. 1 is a schematic structural diagram of a liquid crystal display panel provided by an embodiment of the present disclosure; Fig. 2 is a schematic sectional view of a liquid crystal display panel provided by an embodiment of the present disclosure. As shown in Fig. 1 and Fig. 2, the liquid crystal display panel 100 includes an array substrate 110, an opposite substrate 120 and a liquid crystal layer 130. The array substrate 110 includes a first substrate 111 and a plurality of pixel units 200 located on the first substrate 111; the opposite substrate 120 is arranged at a relatively interval from the array substrate 110 and includes a second substrate 121. The liquid crystal layer 130 is located between the array substrate 110 and the opposite substrate 120; each pixel unit 200 includes a first electrode 210 and a second electrode 220. The first electrode 210 is located on the side of the second electrode 220 away from the first substrate 111. The first electrode 210 includes a first slit 215, and the contrast of the liquid crystal display panel 100 is greater than or equal to 1800.

In the liquid crystal display panel according to the embodiments of the present disclosure, since the first electrode of the liquid crystal display panel has the first slit, the first electrode and the second electrode can form a horizontal electric field, that is, the liquid crystal display panel adopts the ADS (Advanced Super Dimension Switching) mode, which also has the advantages of high transmittance and fast response speed. Consequently, this liquid crystal display panel, while retaining the advantages of traditional ADS-mode liquid crystal display panels such as high transmittance and rapid response speed, has also achieved a high contrast ratio (greater than or equal to 1800), thereby demonstrating superior comprehensive performance.

In some examples, the contrast of the liquid crystal display panel is greater than or equal to 2500. Consequently, this liquid crystal display panel, while retaining the advantages of traditional ADS-mode liquid crystal display panels such as high transmittance and rapid response speed, has also achieved an ultra-high contrast ratio (greater than or equal to 2500), thereby demonstrating superior comprehensive performance.

In some examples, the liquid crystal layer 130 includes the negative liquid crystal and satisfies the following formula:

$$0.001 < \frac{[\Delta n(n_e+n_o)]^2}{K_{ave}} < 0.006,$$

where $\Delta n$ is the birefringence of the negative liquid crystal, $n_o$ is the refractive index of the negative liquid crystal for ordinary light, $n_e$ is the refractive index of the negative liquid crystal for extraordinary light, and $K_{ave}$ is the average elastic constant of the negative liquid crystal. It should be noted that $K_{ave}$ can be the average of the unfolding elastic constant K11, the twisting elastic constant K22 and the bending elastic constant K33 of the liquid crystal. In addition, the above formula can also be regarded as the range formula of the scattering coefficient of the negative liquid crystal.

In the liquid crystal display panel, the contrast is the ratio of the brightness of the bright state L255 to the brightness of the dark state L0, that is, CR= L255/L0. Therefore, the contrast can be improved by increasing the brightness of the bright state or decreasing the brightness of the dark state. Because of the limited enhancement range of the bright state, the enhancement of contrast mainly depends on the reduction of L0 brightness.

In the liquid crystal display panel according to the embodiments of the present disclosure, the liquid crystal layer adopts the negative liquid crystal and satisfies the above formula; because the transmittance of the negative liquid crystal is higher and the dark-state scattering factor is lower, the liquid crystal display panel can reduce the dark-state scattering of liquid crystal to reduce the dark-state brightness, thus improving the contrast. On the other hand, by controlling the birefringence of the negative liquid crystal, the refractive index for ordinary light, the refractive index for extraordinary light and the average elastic constant, the liquid crystal display panel can make the scattering coefficient of the negative liquid crystal satisfy the above formula, further reduce the scattering of liquid crystal in the dark state and reduce the brightness in the dark state without losing the transmittance, thus improving the contrast. In addition, because the first electrode of the liquid crystal display panel has the first slit, the first electrode and the second electrode can form a horizontal electric field, that is, the liquid crystal display panel adopts the ADS (Advanced Super Dimension Switching) mode, which also has the advantages of high transmittance and fast response speed. To sum up, this liquid crystal display panel, while retaining the advantages of traditional ADS-mode liquid crystal display panels such as high transmittance and rapid response speed, has also achieved a high contrast ratio, thereby demonstrating superior comprehensive performance.

In some examples, the birefringence $\Delta n$ of the negative liquid crystal ranges from 0.07 to 0.12, and the average elastic constant $K_{ave}$ of the negative liquid crystal ranges from 12 to 30. Therefore, the liquid crystal display panel can make the scattering coefficient of the negative liquid crystal satisfy the above formula, and improve the contrast without losing the transmittance.

In some examples, the negative liquid crystal satisfies the following formula:

$$0.001 < \frac{[\Delta n(n_e + n_o)]^2}{K_{ave}} < 0.004.$$

Therefore, by controlling the birefringence of the negative liquid crystal, the refractive index for ordinary light, the refractive index for extraordinary light, and the average elastic constant to satisfy the above formula, the liquid crystal display panel can further reduce the scattering of liquid crystal in the dark state and reduce the brightness in the dark state, thereby improving the contrast.

For example, in the case where the negative liquid crystal of the liquid crystal layer satisfies the above formula, the contrast of the liquid crystal display panel can reach above 2500.

In some examples, the negative liquid crystal satisfies the following formula:

$$0.001 < \frac{[\Delta n(n_e + n_o)]^2}{K_{ave}} < 0.0035.$$

Therefore, by controlling the birefringence of the negative liquid crystal, the refractive index for ordinary light, the refractive index for extraordinary light, and the average elastic constant to satisfy the above formula, the liquid crystal display panel can further reduce the scattering of liquid crystal in the dark state and reduce the brightness in the dark state, thereby improving the contrast.

In some examples, the birefringence $\Delta n$ of the negative liquid crystal ranges from 0.09 to 0.1, and the average elastic constant $K_{ave}$ of the negative liquid crystal ranges from 15 to 30. Therefore, the liquid crystal display panel can make the scattering coefficient of the negative liquid crystal satisfy the above formula, and improve the contrast without losing the transmittance.

Fig. 3 is a diagram showing the relationship among the thickness of the liquid crystal layer, the slit angle and the contrast in a liquid crystal display panel provided by an embodiment of the present disclosure. In a liquid crystal display panel, the thickness of the liquid crystal layer will not only affect the scattering brightness in the dark state, but also affect the brightness in the bright state L255. Therefore, for a specific liquid crystal, there is an optimal cell thickness value, if the cell thickness is greater than or less than this value, the contrast will decrease. As shown in Figure 3, the optimal thickness of the liquid crystal layer in this liquid crystal display panel is about 3.35 microns. Of course, the optimal cell thickness of each liquid crystal may be different, which is related to the phase difference $\Delta n$d of the liquid crystal layer. It should be noted that the contrast value shown in Fig. 3 is not an actual value, but a value processed for comparison.

In some examples, the negative liquid crystal phase difference in the liquid crystal layer 130 ranges from 250 nanometers to 360 nanometers. It should be noted that the above phase difference can be expressed by $\Delta n$d, where $\Delta n$ is the birefringence of the negative liquid crystal and d is the thickness of liquid crystal layer.

In some examples, the negative liquid crystal phase difference in the liquid crystal layer 130 ranges from 210 nanometers to 310 nanometers.

In some examples, as shown in Fig. 1, each pixel unit 200 further includes a signal line 230 extending along the first direction, and the included angle $\alpha$ between the extending direction of the first slit 215 and the first direction ranges from 5 degrees to 15 degrees. For example, the signal line 230 may be a gate line or a data line.

In the liquid crystal display panel according to the embodiments of the present disclosure, as shown in Fig. 3, the included angle between the first slit and the first direction (slit angle for short) also has a certain influence on the contrast, and the greater the slit angle, the higher the contrast, because the transmittance increases with the increase of the slit angle. In the liquid crystal display panel, the dark-state brightness is dominated by the scattering factor of the liquid crystal, so the change of the slit angle has nothing to do with the dark-state brightness, so the contrast increases with the increase of the slit angle. However, when designing the slit angle, the finally chosen slit angle will not be too high, and the selection range of the slit angle is 5 degrees -15 degrees. This is because if the slit angle is too high, the driving voltage (Vop) of the liquid crystal will also increase, which will lead to the problems of an unsupported driving chip and a high power consumption. Therefore, by setting the slit angle to be in the range of 5 degrees - 15 degrees, the liquid crystal display panel can further improve the contrast under the premise of avoiding excessively high liquid crystal driving voltage.

In some examples, on the basis of high contrast, in order to further improve the transmittance of products, the value range of the phase difference of the negative liquid crystal in the liquid crystal layer 130 is 320 nanometers - 360 nanometers. Therefore, by improving the phase difference of the negative liquid crystal, the transmittance of the liquid crystal display panel is improved.

In some examples, the birefringence $\Delta n$ of the negative liquid crystal ranges from 0.09 to 0.12, and the thickness d of the liquid crystal layer in the second direction perpendicular to the first substrate ranges from 3.3 microns to 3.8 microns.

In some examples, the included angle $\alpha$ between the extending direction of the first slit and the first direction ranges from 7 degrees to 15 degrees.

In some examples, as shown in Fig. 2, the liquid crystal display panel 100 further includes a first polarizer 141 and a second polarizer 142; the first polarizer 141 is located on the side of the first substrate 111 away from the liquid crystal layer 130, and the second polarizer 142 is located on the side of the second substrate 121 away from the liquid crystal layer 130. The degree of polarization of the first polarizer 141 and the degree of polarization of the second polarizer 142 are both greater than 99.998%.

In the liquid crystal display panel according to the embodiments of the present disclosure, the polarization degrees (PE) of the first polarizer and the second polarizer also have great influence on the contrast, and the higher the polarization degrees of the polarizers, the higher the contrast of the liquid crystal display panel. It is verified by univariate method that the contrast of liquid crystal display panel can be improved by more than 200 when the polarization degree of polarizer is increased from 99.99555% to 99.998%. It should be noted that the polarization degree formula of the polarizer can be calculated by the formula

$$PE = \sqrt{(T_P - T_C)/(T_P + T_C)} \times 100$$

, where PE is the polarization degree of the polarizer, Tp is the parallel transmittance of the polarizer, and Tc is the vertical transmittance of the polarizer.

In some examples, as shown in Fig. 2, the liquid crystal display panel 100 further includes a transparent conductive oxide layer 150 located on the side of the second substrate 121 away from the liquid crystal layer 130, and the thickness of the transparent conductive oxide layer 150 is less than or equal to 120 angstroms. Therefore, the liquid crystal display panel can prevent the introduction of static electricity through the transparent conductive oxide layer. In this case, by controlling the thickness of the transparent conductive oxide layer to be less than or equal to 120 angstroms, the liquid crystal display panel can reduce the non-reflectivity, so that the brightness of the bright state L255 and the brightness of the dark state L0 both decrease, but the ratio of the brightness of the dark state L0 decreases more, thereby improving the contrast.

In some examples, as shown in Fig. 2, the opposite substrate 120 further includes a plurality of color filters 122 and a black matrix 123 located between two adjacent color filters 122; the width of the black matrix 123 is 14 microns or more. Therefore, the liquid crystal display panel will reduce the light leakage in the dark state, thereby reducing the brightness in the dark state and further improving the contrast.

In some examples, the thickness of the black matrix 123 is greater than or equal to 1.3 microns. Therefore, the liquid crystal display panel will reduce the light leakage in the dark state, thereby reducing the brightness in the dark state and further improving the contrast.

In some examples, as shown in Fig. 2, the liquid crystal display panel 100 further includes a first alignment layer 161 and a second alignment layer 162; the first alignment layer 161 is located on the surface of the array substrate 110 close to the liquid crystal layer 130. The second alignment layer 162 is located on the surface of the opposite substrate 120 close to the liquid crystal layer 130.

Fig. 9 is a diagram showing the relationship between the rubbing orientation direction of the orientation layer and the first slit in a liquid crystal display panel provided by an embodiment of the present disclosure. As shown in Fig. 9, the rubbing orientation direction of the first orientation layer 161 is perpendicular to the extending direction of the gate line, and the rubbing orientation direction of the second orientation layer 162 is perpendicular to the extending direction of the gate line. Therefore, the liquid crystal display panel can further reduce the light leakage in the dark state, thereby improving the contrast.

An embodiment of the present disclosure also provides a display device. Fig. 11 is a schematic diagram of a display device provided by an embodiment of the present disclosure. As shown in Fig. 11, the display device 300 includes the above-mentioned liquid crystal display panel 100. Therefore, the display device has a technical effect corresponding to the beneficial technical effect of the liquid crystal display panel included therein.

For example, the display device may be a TV set, a monitor, an electronic picture frame, an electronic picture frame, a navigator, a notebook computer, a tablet computer, a smart phone and other electronic products with display functions.

For the present disclosure, the following statements should be noted:

> (1) The accompanying drawings involve only the structure(s) in connection with the embodiment(s) of the present disclosure, and other structure(s) can be referred to common design(s).
> (2) In case of no conflict, the embodiments of the present disclosure and the features in the embodiments can be combined with each other to obtain new embodiments.

The above is only a specific embodiment of the present disclosure, but the protection scope of the present disclosure is not limited to this. Changes or substitutions that can be easily thought of within the technical scope disclosed in the present disclosure by those skilled and familiar with this art should be covered by the protection scope of the present disclosure. Therefore, the protection scope of the present disclosure should be based on the scope of protection of the claims.

**Claims**

**1.** A liquid crystal display panel, comprising:

> an array substrate, including a first substrate and a plurality of pixel units located on the first substrate;

an opposite substrate, opposite to and spaced apart from the array substrate, and including a second substrate; and

a liquid crystal layer, located between the array substrate and the opposite substrate,

wherein each of the plurality of pixel units comprises a first electrode and a second electrode, wherein the first electrode is on a side of the second electrode away from the first substrate, and the first electrode comprises a first slit,

the liquid crystal layer includes negative liquid crystal and satisfies a following formula:

$$0.001 < \frac{[\Delta n(n_e+n_o)]^2}{K_{ave}} < 0.006,$$

wherein $\Delta n$ is a birefringence of the negative liquid crystal, $n_o$ is a refractive index of the negative liquid crystal for ordinary light, $n_e$ is a refractive index of the negative liquid crystal for extraordinary light, and $K_{ave}$ is an average elastic constant of the negative liquid crystal.

2. The liquid crystal display panel according to claim 1, wherein the birefringence $\Delta n$ of the negative liquid crystal ranges from 0.07 to 0.12, and the average elastic constant $K_{ave}$ of the negative liquid crystal ranges from 12 to 30.

3. The liquid crystal display panel according to claim 2, wherein the negative liquid crystal satisfies a following formula:

$$0.001 < \frac{[\Delta n(n_e+n_o)]^2}{K_{ave}} < 0.004.$$

4. The liquid crystal display panel according to any one of claims 1-3, wherein a phase difference $\Delta nd$ of the negative liquid crystal ranges from 250 nm to 360 nm.

5. The liquid crystal display panel according to any one of claims 1-3, wherein each of the plurality of pixel units further comprises a signal line extending along a first direction, and an included angle $\alpha$ between an extension direction of the first slit and the first direction ranges from 5 degrees to 15 degrees.

6. The liquid crystal display panel according to any one of claims 1-4, wherein a contrast of the liquid crystal display panel is greater than or equal to 1800.

7. The liquid crystal display panel according to claim 6, wherein the contrast of the liquid crystal display panel is greater than or equal to 2500.

8. The liquid crystal display panel according to any one of claims 1-3, wherein a phase difference $\Delta nd$ of the negative liquid crystal ranges from 320 nm to 360 nm.

9. The liquid crystal display panel according to claim 8, wherein the birefringence $\Delta n$ of the negative liquid crystal ranges from 0.09 to 0.12, and a thickness d of the liquid crystal layer in a second direction perpendicular to the first substrate ranges from 3.3 microns to 3.8 microns.

10. The liquid crystal display panel according to claim 8, wherein each of the plurality of pixel units further comprises a signal line extending along a first direction, and an included angle $\alpha$ between an extension direction of the first slit and the first direction ranges from 7 degrees to 15 degrees.

11. The liquid crystal display panel according to any one of claims 1-3, wherein the negative liquid crystal further satisfies a following formula:

$$\gamma 1/k22 \leqslant 10,$$

wherein $\gamma 1$ is a rotational viscosity of the negative liquid crystal, and $k22$ is a torsional elastic constant of the negative liquid crystal.

12. The liquid crystal display panel according to claim 11, wherein the negative liquid crystal further satisfies a following formula:

$$\gamma 1/k22 \leqslant 9,$$

wherein $\gamma 1$ is the rotational viscosity of the negative liquid crystal, and $k22$ is the torsional elastic constant of the negative liquid crystal.

13. The liquid crystal display panel according to claim 12, wherein a thickness d of the liquid crystal layer in a second direction perpendicular to the first substrate ranges from 2.5 microns to 3.3 microns.

14. The liquid crystal display panel according to claim 13, wherein the thickness d of the liquid crystal layer in the second direction perpendicular to the first substrate is ranges from 2.5 microns to 3.0 microns.

15. The liquid crystal display panel according to claim 13, wherein each of the plurality of pixel units further comprises a signal line extending along a first direction, and an included angle $\alpha$ between an extension direction of the first slit and the first direction ranges from 11 degrees to 15 degrees.

16. The liquid crystal display panel according to any one of claims 1-3, wherein the negative liquid crystal further satisfies the following formula:

$$K_{ave}/\Delta\varepsilon < 5.5,$$

wherein $\Delta\varepsilon$ is a dielectric constant of the negative liquid crystal.

17. The liquid crystal display panel according to claim 16, wherein the negative liquid crystal further satisfies a following formula:

$$Kave/\Delta\varepsilon < 2.7,$$

wherein $\Delta\varepsilon$ is the dielectric constant of the negative liquid crystal.

18. The liquid crystal display panel according to claim 16, wherein a thickness d of the liquid crystal layer in a second direction perpendicular to the first substrate is greater than or equal to 2.8 microns.

19. The liquid crystal display panel according to claim 16, wherein each of the plurality of pixel units further comprises a signal line extending along a first direction, and an included angle $\alpha$ between an extension direction of the first slit and the first direction is less than or equal to 11 degrees.

20. The liquid crystal display panel according to any one of claims 1-3, wherein a thickness d of the liquid crystal layer in a second direction perpendicular to the first substrate ranges from 2.8 microns to 3.3 microns; each of the plurality of pixel units further comprises a signal line extending along a first direction, and an included angle $\alpha$ between an extension direction of the first slit and the first direction greater than or equal to 7 degrees.

21. The liquid crystal display panel according to claim 20, wherein a gray-scale response time of the liquid crystal display panel is less than or equal to 8ms.

22. The liquid crystal display panel according to claim 21, wherein the thickness d of the liquid crystal layer in the second direction perpendicular to the first substrate ranges from 2.5 microns to 3.0 microns, and the included angle $\alpha$ between the extension direction of the first slit and the first direction ranges from 11 degrees to 15 degrees.

23. The liquid crystal display panel according to any one of claims 1-3, further comprising:

   a first polarizer, located on a side of the first substrate away from the liquid crystal layer; and a second polarizer, located on a side of the second substrate away from the liquid crystal layer, wherein both a polarization degree of the first polarizer and a polarization degree of the second polarizer are greater than 99.998%.

24. The liquid crystal display panel according to any one of claims 1-3, further comprising:

   a transparent conductive oxide layer, located on a side of the second substrate away from the liquid crystal layer, wherein a thickness of the transparent conductive oxide layer is less than or equal to 120 angstroms.

25. The liquid crystal display panel according to any one of claims 1-3, wherein the opposite substrate further comprises:

   a plurality of color filters; and a black matrix, located between two adjacent color filters among the plurality of color filters, wherein a width of the black matrix is greater than or equal to 14 microns.

26. The liquid crystal display panel according to claim 22, wherein a thickness of the black matrix is greater than or equal to 1.3 microns.

27. The liquid crystal display panel according to any one of claims 1-3, further comprising:

   a gate line, extending in a first direction; a first orientation layer, located on a surface of the array substrate close to the liquid crystal layer; and a second orientation layer, located on a surface of the opposite substrate close to the liquid crystal layer, wherein a rubbing orientation direction of the first orientation layer is perpendicular to an extension direction of the gate line, and a rubbing orientation direction of the second orientation layer is perpendicular to an extension direction of the first slit.

28. A liquid crystal display panel, comprising:

   an array substrate, including a first substrate and a plurality of pixel units located on the first substrate; an opposite substrate, opposite to and spaced apart from the array substrate, and including a second substrate; and a liquid crystal layer, located between the array substrate and the opposite substrate,
wherein each of the plurality of pixel units comprises a first electrode and a second electrode, wherein the first electrode is on a side of the second electrode away from the first substrate, the first electrode comprises a first slit, and a contrast of the liquid crystal display panel is greater than or equal to 1800.

29. The liquid crystal display panel according to claim 28, wherein the liquid crystal layer includes negative liquid crystal and satisfies a following formula:

$$0.001 < \frac{[\Delta n(n_e + n_o)]^2}{K_{ave}} < 0.006,$$

wherein $\Delta n$ is a birefringence of the negative liquid crystal, $n_o$ is a refractive index of the negative liquid crystal for ordinary light, $n_e$ is a refractive index of the negative liquid crystal for extraordinary light, and $K_{ave}$ is an average elastic constant of the negative liquid crystal.

30. The liquid crystal display panel according to claim 29, wherein the negative liquid crystal satisfies a following formula:

$$0.001 < \frac{[\Delta n(n_e + n_o)]^2}{K_{ave}} < 0.004,$$

wherein $\Delta n$ is the birefringence of the negative liquid crystal, $n_o$ is the refractive index of the negative liquid crystal for ordinary light, $n_e$ is the refractive index of the negative liquid crystal for extraordinary light, and $K_{ave}$ is the average elastic constant of the negative liquid crystal.

31. The liquid crystal display panel according to any one of claims 28-30, wherein a thickness d of the liquid crystal layer in a second direction perpendicular to the first substrate ranges from 2.5 microns to 3.6 microns.

32. The liquid crystal display panel according to any one of claims 28-30, wherein a phase difference $\Delta nd$ of the negative liquid crystal ranges from 210 nm to 310 nm.

33. The liquid crystal display panel according to any one of claims 28-30, wherein each of the plurality of pixel units further comprises a signal line extending along a first direction, and an included angle $\alpha$ between an extension direction of the first slit and the first direction ranges from 5 degrees to 15 degrees.

34. The liquid crystal display panel according to any one of claims 28-30, wherein the contrast of the liquid crystal display panel is greater than or equal to 2500.

35. The liquid crystal display panel according to claim 34, wherein a transmittance ratio of the liquid crystal display panel is greater than or equal to 5.2%.

36. The liquid crystal display panel according to claim 35, wherein a thickness d of the liquid crystal layer in a second direction perpendicular to the first substrate ranges from 3.3 microns to 3.7 microns, and an included angle $\alpha$ between an extension direction of the first slit and a first direction ranges from 11 degrees to 15 degrees.

37. The liquid crystal display panel according to any one of claims 28-30, further comprising:

a first polarizer, located on a side of the first substrate away from the liquid crystal layer; and
a second polarizer, located on a side of the second substrate away from the liquid crystal layer,
wherein both a polarization degree of the first polarizer and a polarization degree of the second polarizer are greater than 99.998%.

38. The liquid crystal display panel according to any one of claims 28-30, further comprising:

a transparent conductive oxide layer, located on a side of the second substrate away from the liquid crystal layer,
wherein a thickness of the transparent conductive oxide layer is less than 120 angstroms.

39. The liquid crystal display panel according to any one of claims 28-30, wherein the opposite substrate further comprises:

a plurality of color filters; and
a black matrix, located between two adjacent color filters among the plurality of color filters,
wherein a width of the black matrix is greater than or equal to 14 microns.

40. The liquid crystal display panel according to claim 39, wherein a thickness of the black matrix is greater than or equal to 1.3 microns.

41. The liquid crystal display panel according to any one of claims 28-30, further comprising:

a gate line, extending in a first direction;
a first orientation layer, located on a surface of the array substrate close to the liquid crystal layer; and
a second orientation layer, located on a surface of the opposite substrate close to the liquid crystal layer,
wherein a rubbing orientation direction of the first orientation layer is perpendicular to an extension direction of the gate line, and a rubbing orientation direction of the second orientation layer is perpendicular to the extension direction of the gate line.

42. A display device, comprising the liquid crystal display panel according to any one of claims 1-41.

Fig. 1

Fig. 2

Fig. 3

Thickness of the liquid crystal layer/μm

Fig. 4

**100**

Fig. 5

Fig. 6

Fig. 7

Fig. 8

210

215

Rubbing
orientation
direction

Fig. 9

210

215

Rubbing
orientation
direction

Fig. 10

Fig. 11

Fig. 12

| INTERNATIONAL SEARCH REPORT | International application No. |
|---|---|
| | **PCT/CN2023/133618** |

**A. CLASSIFICATION OF SUBJECT MATTER**

G02F1/1333(2006.01)i

According to International Patent Classification (IPC) or to both national classification and IPC

**B. FIELDS SEARCHED**

Minimum documentation searched (classification system followed by classification symbols)

IPC: G02F1 C09K19

Documentation searched other than minimum documentation to the extent that such documents are included in the fields searched

Electronic data base consulted during the international search (name of data base and, where practicable, search terms used)

CNTXT, ENTXTC, DWPI, CNKI: 液晶, 显示, 负性液晶, 平均弹性常数, 弹性常数, 散射系数, 折射率, 对比度, 水平电场, 水平液晶, 阵列基板, 电极, 狭缝, 倾斜, 角, 厚度, 介电常数, LC, liquid crystal, display+, negative, elastic constant, scatter+, coeficient, refractive index, contrast, ADS, array, electrode?, slit?, angle?, thickness, dielectric constant

**C. DOCUMENTS CONSIDERED TO BE RELEVANT**

| Category* | Citation of document, with indication, where appropriate, of the relevant passages | Relevant to claim No. |
|---|---|---|
| PX | CN 115793306 A (BEIJING BOE DISPLAY TECHNOLOGY CO., LTD. et al.) 14 March 2023 (2023-03-14)<br>claims 1-42, description, paragraphs 78-181, and figures 1-12 | 1-42 |
| X | US 2009059156 A1 (HITACHI DISPLAYS LTD.) 05 March 2009 (2009-03-05)<br>claim 1, description, paragraphs 37-38, 43, 50-53, 59, 65, and 68, and figures 7-9 | 1-42 |
| A | CN 114656975 A (GUANGZHOU CHINA STAR OPTOELECTRONICS SEMICONDUCTOR DISPLAY TECHNOLOGY CO., LTD.) 24 June 2022 (2022-06-24)<br>entire document | 1-42 |
| A | CN 111315846 A (DIC CORP.) 19 June 2020 (2020-06-19)<br>entire document | 1-42 |
| A | CN 114806599 A (BEIJING BAYI SPACE LCD MATERIALS TECHNOLOGY CO., LTD.) 29 July 2022 (2022-07-29)<br>entire document | 1-42 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **23 January 2024** | **08 February 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/133618**

| C. | DOCUMENTS CONSIDERED TO BE RELEVANT | |
|---|---|---|
| Category* | Citation of document, with indication, where appropriate, of the relevant passages | Relevant to claim No. |
| A | CN 111117662 A (JIANGSU HECHENG DISPLAY TECHNOLOGY CO., LTD.) 08 May 2020 (2020-05-08)<br>entire document | 1-42 |
| A | US 2019353962 A1 (SHIJIAZHUANG CHENGZHI YONGHUA DISPLAY MATERIALS CO., LTD.) 21 November 2019 (2019-11-21)<br>entire document | 1-42 |

Form PCT/ISA/210 (second sheet) (July 2022)

**INTERNATIONAL SEARCH REPORT**
Information on patent family members

International application No.

**PCT/CN2023/133618**

| Patent document cited in search report | | | Publication date (day/month/year) | Patent family member(s) | | | Publication date (day/month/year) |
|---|---|---|---|---|---|---|---|
| CN | 115793306 | A | 14 March 2023 | | None | | |
| US | 2009059156 | A1 | 05 March 2009 | JP | 2009058697 | A | 19 March 2009 |
| | | | | JP | 4682376 | B2 | 11 May 2011 |
| | | | | US | 7898638 | B2 | 01 March 2011 |
| | | | | JP | 2011128635 | A | 30 June 2011 |
| | | | | JP | 4990402 | B2 | 30 June 2011 |
| CN | 114656975 | A | 24 June 2022 | | None | | |
| CN | 111315846 | A | 19 June 2020 | JP | 2019206704 | A | 05 December 2019 |
| | | | | JP | 6904381 | B2 | 14 July 2021 |
| | | | | WO | 2019116901 | A1 | 20 June 2019 |
| | | | | JP | 6555450 | B1 | 07 August 2019 |
| | | | | JPWO | 2019116901 | A1 | 19 December 2019 |
| | | | | KR | 20200096501 | A | 12 August 2020 |
| CN | 114806599 | A | 29 July 2022 | | None | | |
| CN | 111117662 | A | 08 May 2020 | TW | 202016261 | A | 01 May 2020 |
| | | | | TWI | 726454 | B | 01 May 2021 |
| | | | | CN | 111117662 | B | 18 January 2022 |
| US | 2019353962 | A1 | 21 November 2019 | US | 10698266 | B2 | 30 June 2020 |
| | | | | CN | 110501851 | B | 06 May 2022 |
| | | | | CN | 110501851 | A | 26 November 2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211491298